# EUROPEAN PATENT APPLICATION

(11) **EP 3 680 647 A1**
(43) Date of publication of application: **15.07.2020**
(21) Application number: 20150598.9
(22) Date of filing: 07.01.2020
(51) Int. Cl.: G01N 21/85

(54) **GAS ANALYSIS DEVICE**

(30) Priority: 11.01.2019 JP 2019003204
(71) Applicant: Yokogawa Electric Corporation, Musashino-shi Tokyo 180-8750 (JP)
(72) Inventor: Matsuo, Junichi, Tokyo, 180-8750 (JP)
(74) Representative: Osha Liang

(57) **Abstract**

A gas analysis device (1; 101) includes: a light emitter (42; 152) configured to irradiate, with a measurement beam, a gas flowing in piping (2; 102); a processor configured to analyze components contained in the gas based on an absorption spectrum of the measurement beam passing through the gas; a probe (11) that covers the optical path of the measurement beam; and a window (23; 123) through which the measurement beam passes and that is configured to be block off a hollow portion of the probe (11) from the gas.

## Description

### BACKGROUND

### TECHNICAL FIELD

The present invention generally relates to a gas analysis device.

### RELATED ART

A gas analysis device irradiates a laser beam to a gas subject to measurement and measures components contained in the gas subject to measurement, the concentrations thereof, and the like based on the absorption spectrum of the laser beam which passes through the gas subject to measurement. This laser gas analysis device is provided with a light emitting part for emitting a laser beam irradiated to the gas subject to measurement and with a light receiving part for receiving the laser beam which passes through the gas subject to measurement (for example, see Patent Document 1).

Patent Document 1: JP 2010-185694 A

Recently, gas analysis devices have come to be used in various technical fields, and the temperature range for the gas subject to measurement has also expanded. The temperature range for the gas subject to measurement in conventional gas analysis devices is approximately 600°C, but recently gases at a temperature higher than 600°C have been subject to measurement, and there is demand for a gas analysis device capable of measuring the components, the concentrations thereof, and the like in a gas at a temperature higher than 600°C (for example, 1000°C or greater).

### SUMMARY

One or more embodiments of the present invention are directed to a gas analysis device which can measure gas at a high temperature.

The gas analysis device according to one or more embodiments irradiates a measurement beam to a gas subject to measurement which is flowing in piping, and performs analysis on the components contained in the gas subject to measurement based on the absorption spectrum of the measurement beam passing through the gas subject to measurement, and the gas analysis device is provided with a cylindrical member having at least a portion thereof disposed within the piping, being provided so as to cover the optical path of the measurement beam, and is provided with a transparent member that the measurement beam is able to pass through, being provided so as to block off the hollow portion of the cylindrical member and be exposed to the gas subject to measurement which is flowing in the piping.

The gas analysis device according to one or more embodiments includes: a light emitter configured to irradiate, with a measurement beam, a gas flowing in piping; a processor configured to analyze components contained in the gas based on an absorption spectrum of the measurement beam passing through the gas; a probe that covers the optical path of the measurement beam; and a window through which the measurement beam passes and that is configured to block off a hollow portion of the probe from the gas.

According to one or more embodiments, the window may be configured to separate a space in the probe from a space in the piping.

The gas analysis device according to one or more embodiments includes: a light emitter configured to irradiate, with a measurement beam, a gas flowing in piping; a processor configured to analyze components contained in the gas based on an absorption spectrum of the measurement beam passing through the gas; a first insertion tube that covers the optical path of the measurement beam; a first window through which the measurement beam passes and that is configured to block off a hollow portion of the first insertion tube from the gas; a second insertion tube that covers the optical path of the measurement beam; and a second window through which the measurement beam passes and that is configured to block off a hollow portion of the second insertion tube from the gas. A measurement region through the gas is defined between the first window and the second window when the first window and the second window are disposed to oppose each other in the piping.

Further embodiments of the gas analysis device are defined in the dependent claims.

The gas analysis device according to one or more embodiments of the present invention is capable of measuring high-temperature gas.

### BRIEF DESCRIPTION OF THE DRAWINGS

FIG. 1 is a schematic diagram illustrating the structure of the gas analysis device according to one or more embodiments.
FIG. 2 is a schematic diagram illustrating the structure of the gas analysis device according to one or more embodiments.

### DETAILED DESCRIPTION

Embodiments of the present invention will be described herein with reference to the drawings. Those skilled in the art will recognize that many alternative embodiments can be accomplished using the teaching of the present invention and that the present invention is not limited to the embodiments illustrated herein for explanatory purposes.

The gas analysis device according to one or more embodiments applies to a probe type gas analysis device. Here, a probe type means, for example, a kind of gas analysis device having structure with an integrally built in light source, reflection structure, and light detector, and the gas to be measured is introduced from one side of the piping through which it flows.

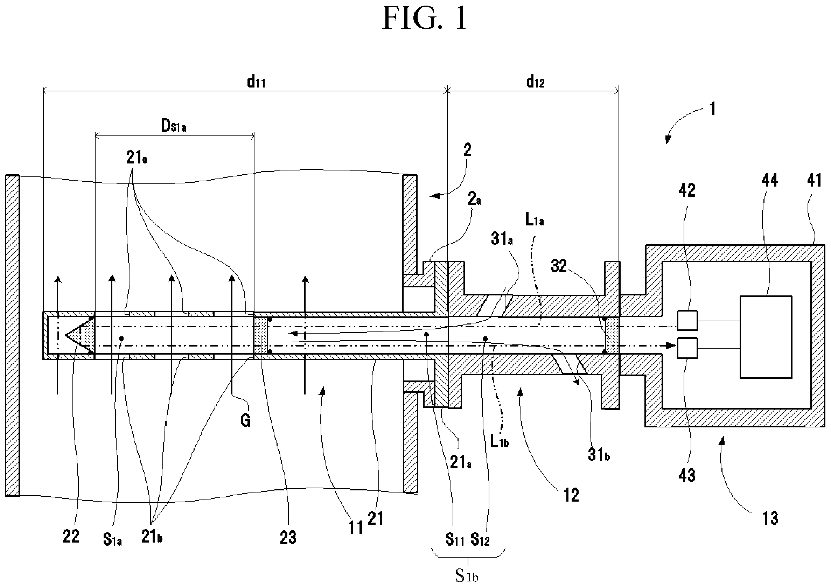

The structure of the gas analysis device according to one or more embodiments will be described with reference to FIG. 1.

As illustrated in FIG. 1, the gas analysis device 1 is mounted to a gas pipe (piping) 2 through which the gas subject to measurement (gas to be measured) G flows, and the gas analysis device performs analysis on (i.e., analyzes) the components contained in the gas to be measured G flowing through the gas pipe 2 (measures the components, the concentrations thereof, and the like). The gas to be measured G includes gas (process gas) such as, for example, CO, CO₂, H₂O, CₘHₙ (m and n are any whole number), NH₃, and O₂.

The gas analysis device 1 comprises a probe (cylindrical member) 11 mounted to the gas pipe 2 and having a majority thereof extending inside the gas pipe 2; a cooling unit 12 connected to the probe 11 and disposed outside the gas pipe 2; and an analysis unit 13 connected to the cooling unit 12 and disposed outside the gas pipe 2.

Here, the analysis unit 13 emits and receives a measurement beam and analyzes the absorption spectrum of the gas to be measured G; the probe 11 includes a reflection structure for reflecting the measurement beam and forms a measurement region S₁ₐ for causing the measurement beam to pass through to the gas to be measured G; and the cooling unit 12 includes a cooling mechanism (heat transfer inhibiting mechanism or cooler) for inhibiting heat transfer from the probe 11 to the analysis unit 13. In other words, in the gas analysis device 1, the analysis unit 13 is connected to the probe 11 through the cooling unit 12 which includes a cooling mechanism.

The probe 11 is provided with a probe main body 21 connected to the gas pipe 2. The probe main body 21 is a hollow member formed cylindrically (for example, substantially cylindrically) along the optical path such that the measurement beam can pass through, and a flange 21a is formed on a base end thereof. That is, the probe main body 21 is a cylindrically member covering the optical path of the measurement beam. The flange 21a is mechanically connected to a mounting member 2a mounted to the gas pipe 2, and a majority of the probe main body 21 extends inside the gas pipe 2. The probe main body 21 extends in, for example, a direction (optical axis direction) substantially orthogonal to the flow direction of the gas to be measured G in the gas pipe 2, and the external length d₁₁ in this extension direction is, for example, approximately 500 to 2000 mm.

The probe main body 21 is composed of a heat resistant member that is heat resistant in a temperature band higher than the temperature of the gas to be measured G flowing through the gas pipe 2, and is formed of, for example, a ceramic such as alumina. In one or more embodiments, the heat resistant temperature of the probe main body 21 is, for example, at least 600°C, or at least 1000°C, or at least 1200°C.

A reflection part (reflection member or reflector) 22 capable of reflecting at least a portion of the measurement beam is provided near the tip (end positioned in the gas pipe 2) of the probe 11 (probe main body 21). The reflection part 22 may include any reflection structure for the measurement beam such as a corner cube prism or a retroreflector. The reflection unit 22 is composed of, for example, sapphire, and may be integrally assembled with the internal face of the probe main body 21 using a metallized connection or the like.

Furthermore, a window (transparent member) 23 through which the measurement beam can pass through is provided substantially in the center of the probe 11 (probe main body 21). The window 23 is composed of, for example, sapphire, and is integrally assembled with the internal surface of the probe main body 21 using a metallized connection or the like. Here, the window 23 is distanced from the reflection part 22 only by a predetermined distance D_{S1a}, is fixed so as to obstruct the interior of the probe main body 21, and defines a measurement region S₁ₐ together with the reflection part 22. That is, the window 23 divides (separates) the space (measurement region) S₁ₐ on the tip side from the window 23 from the space (non-measurement region) S₁₁ on the base end side from the window 23 in the probe main body 21, and is provided so as to block the hollow portion of the probe main body 21 and be exposed to the gas to be measured G flowing in the gas pipe 2.

Openings 21b and 21c are formed in the probe 11 (probe main body 21) facing the measurement region S₁ₐ. The openings 21b and 21c include an upstream side opening 21b positioned on the upstream side of the flow direction of the gas to be measured G to guide the gas to be measured G into the measurement region S₁ₐ, and a downstream side opening 21c positioned on the downstream side of the flow direction of the gas to be measured G to discharge the gas to be measured G from inside the measurement region S₁ₐ. A plurality (three in FIG. 1) of the upstream side opening 21b and the downstream side opening 21c is provided throughout the entire measurement region S₁ₐ and along the extension direction (optical axis direction of the measurement beam) of the probe main body 21.Of course, when the intensity and the like of the probe main body 21 can be ensured, one each of the upstream side opening 21b and the downstream side opening 21c continuing (formed long) in the extension direction of the probe main body 21 throughout the entire measurement region S₁ₐ may be provided.

One end of the cooling unit 12 is provided with a cooling unit main body 31 mounted to the base end (opposite end of the reflection side and the tip) of the probe 11. The cooling unit main body 31 is a hollow member formed cylindrically (for example, substantially cylindrically) along the optical axis such that the measurement beam can pass through, and the internal space S₁₂ thereof communicates with the non-measurement region S₁₁ of the probe 11. The cooling unit main body 31, for example, extends in the same direction as the extension direction of the probe 11 (probe main body 21) on the outside of the gas pipe 2, and the external length d₁₂ in this extension direction is, for example, approximately 500 mm.

The cooling unit main body 31 is composed of a heat resistant member that is heat resistant in a temperature band higher than the temperature of the gas to be measured G flowing through the gas pipe 2, and is formed of, for example, a ceramic such as alumina. In one or more embodiments, the heat resistant temperature of the cooling unit main body 31 is, for example, at least 600°C, or at least 1000°C, or at least 1200°C. The material of the cooling unit main body 31 may differ from the material of the probe main body 21. Furthermore, the heat resistant temperature of the cooling unit main body 31 may differ from the heat resistant temperature of the probe main body 21, may be a temperature higher than the heat resistant temperature of the probe main body 21, or may be a temperature lower than the heat resistant temperature of the probe main body 21. In one or more embodiments, the heat resistant temperature of the cooling unit main body 31 is the same temperature as or a temperature that is less than the heat resistant temperature of the probe main body 21.

A window (transparent member) 32 through which the measurement beam is able to pass through is provided near the other end of the cooling unit 12 (cooling unit main body 31). The window 32 is composed of, for example, sapphire, and is integrally assembled with the internal face of the cooling unit main body 31 using a metallized connection or the like. Here, the window 32 is fixed so as to obstruct the interior of the cooling unit main body 31, and defines a heat transfer inhibiting space S_{1b} filled with coolant as described hereafter, according to the non-measurement region S₁₁ and the internal space S₁₂ (the probe main body 21 and the window 23, the cooling unit main body 31 and the window 32). In other words, the window 32 is provided so as to block the hollow portion of the cooling unit main body 31.

The cooling unit 12 (cooling unit main body 31) is provided with a coolant feed port 31a for feeding coolant to the heat transfer inhibiting space S_{1b} and a coolant discharge port 31b for discharging coolant fed to the heat transfer inhibiting space S_{1b}. The coolant feed port 31a and the coolant discharge port 31b are each formed facing the internal space S₁₂. Here, the internal space S₁₂ communicates with the non-measurement region S₁₁, and thus the inside of the space (heat transfer inhibiting space) S_{1b} of both the internal space S₁₂ and the non-measurement region S₁₁ is filled with coolant fed from the coolant feed port 31a. The coolant is a fluid (gas or liquid) that does not influence the spectrum of the measurement beam, and is, for example, a gas such as N2. In other words, the cooling unit 12 includes a cooling mechanism for circulating coolant to the space (non-measurement region) S₁₁ in the probe 1 isolated from the space (measurement region) S₁ₐ in the gas pipe 2 using the window 23.

In one or more embodiments, the coolant feed port 31a and the coolant discharge port 31b are provided considering the circulation of coolant in the space (heat transfer inhibiting space) S_{1b} of both the non-measurement space S₁₁ and the internal space S₁₂. For example, the coolant feed port 31a and the coolant discharge port 31b may be provided offset from the optical axis direction without opposing each other. Furthermore, the coolant feed port 31a may be positioned closer to the probe 11 side than the coolant discharge port 31b. Furthermore, the coolant feed port 31a may be provided facing the probe 11 side such that it opens obliquely. Furthermore, the coolant discharge port 31b may be provided facing the probe 11 side that that it opens obliquely.

The analysis unit 13 is provided with an analysis unit main body (housing) 41 mounted to the other end of the cooling unit 12. The analysis unit 13 is provided with a light emitting part (light emitter) 42 which emits the measurement beam, a light receiving part 43 which receives the measurement beam, and an arithmetic logic part 44 for measuring and analyzing the absorption spectrum of the measurement beam. The light emitting part 42, the light receiving part 43, and the arithmetic logic part 44 are electrically connected via a plurality of electronic substrates (not illustrated). The analysis unit main body 41 is, for example, a pressure resistant explosion proof container housing each of these components. The analysis unit main body 41 includes a module structure for integrally housing each of these components. The light emitting part 42 and the light receiving part 43 are disposed near each other in the analysis unit main body 41.

The light emitting part 42 includes an arbitrary light source capable of measuring the gas to be measured G using TDLAS (Tunable Diode Laser Absorption Spectroscopy). The light emitting part 42 includes, for example, a semiconductor laser. The light receiving part 43 includes an arbitrary light detector capable of measuring the gas to be measured G using TDLAS. The light receiving part 43 includes, for example, a photodiode. The arithmetic logic part 44 includes at least one processor. The arithmetic logic part 44 controls the operation of the entire gas analysis device 1 including the light emitting part 42 and the light receiving part 43.

The operation of the gas analysis device according to one or more embodiments will be described with reference to FIG. 1.

The light emitting part 42 irradiates the measurement beam to the reflection part 22 of the probe 11. In FIG. 1, the forward measurement beam to be reflected by the reflection part 22 is represented as an emitted beam L₁ₐ. The light emitting part 42 irradiates the emitted beam L₁ₐ to the measurement region S₁ₐ which contains the gas to be measured G. The emitted beam L₁ₐ passes through the window 32 along the optical axis thereof, and thereafter propagates through the window 23 into the probe 11 (probe main body 21) extending so as to superpose the measurement region S₁ₐ, and then enters the reflection part 22.

The reflection unit 22 reflects at least a portion of the emitted beam L₁ₐ passing through the measurement region S₁ₐ. In FIG. 1, the return measurement beam reflected by the reflection part 22 is represented as a reflected beam L_{1b}. The reflected beam L_{1b} once again passes through the probe 11 (probe main body 21) including the measurement region S₁ₐ via the window 23, then passes through the window 32, and thereafter, enters the light receiving unit 43. That is, the light receiving unit 43 receives the reflected beam L_{1b} which is reflected by the reflection part 22 and passes through the measurement region S₁ₐ.

The arithmetic logic part 44 uses the spectrum of the reflected beam L_{1b} received by the light receiving part 43 to find the absorption spectrum of the gas to be measured G and find the components contained in the gas to be measured G and the concentrations thereof.

Here, the probe main body 21, the reflection part 22, and the window 23 exposed to the gas to be measured G are each configured by a material having high heat resistance, and thus the gas analysis device 1 can measure the components of a high temperature (for example, 1000°C or greater) gas to be measured G and the concentrations thereof.

Furthermore, the gas analysis device 1 effectively inhibits heat transfer from the probe main body 21, the reflection part 22, and the window 23 exposed to the gas to be measured G due to the function of the cooling unit 12, or in other words, due to circulating coolant to the heat transfer inhibiting space S_{1b} configured by the non-measurement region S₁₁ and the internal space S₁₂, and it is possible to sufficiently reduce the influence of heat transfer to the analysis unit 13 (light emitting part 42, light receiving part 43, and arithmetic logic part 44).

The gas analysis device 1 performs analysis of components (measures components, the concentrations thereof, and the like) contained in the gas to be measured G flowing through the gas pipe 2 as described above.

The gas analysis device 1 irradiates a measurement beam to the gas to be measured (gas subject to measurement) G flowing in the gas pipe (piping) 2 and performs analysis on the components contained in the gas to be measured G based on the absorption spectrum of the measurement beam passing through the gas to be measured G, is provided with a probe main body (cylindrical member) 21 disposed with at least a portion thereof in the gas pipe 2, being provided so as to cover the optical path of the measurement beam, and provided with a window (transparent member) 23 through which the measurement beam can pass through, provided so as to block off the hollow portion of the probe main body 21 and be exposed to the gas to be measured G flowing in the gas pipe 2.

The gas analysis device 1 has the configuration described above, and thus the space inside the gas pipe 2 (through which the gas to be measured G flows) and the space outside the gas pipe 2 (wherein the analysis unit 13 is disposed) are separated by the window 23. Therefore, for example, even when the gas to be measured G is at a high temperature (for example, 1000°C or greater), the gas to be measured G does not flow out to the analysis unit 13 via the probe 11, and it is possible to inhibit heat transfer from the probe 11 to the analysis unit 13 due to the gas to be measured G. In other words, the gas analysis unit 1 can measure the high temperature gas to be measured G.

Furthermore, the gas analysis device 1 is provided with the cooling unit (cooling mechanism) 12 which circulates coolant to the space in the probe main body 21 separated from the space in the gas pipe 2 by the window 23, or in other words, is provided with the coolant feed port (cooling mechanism) 12a and the coolant discharge port (cooling mechanism) 12b. This configuration enables the gas analysis device 1 to better inhibit heat transfer from the probe 11 to the analysis unit 13 due to the gas to be measured G.

Moreover, the probe main body 21 in the gas analysis device 1 is composed of a ceramic such as alumina. This configuration enables the gas analysis device 1 to better inhibit heat transfer from the probe 11 to the analysis unit 13 due to the gas to be measured G.

Furthermore, the gas analysis device 1 is provided with a reflection part (reflection member) 22 capable of reflecting at least a portion of the measurement beam, being provided distanced from the window 23 at a predetermined distance D_{S1a}, and defines the measurement region S₁ₐ between the window 23 and the reflection part 22 through which the gas to be measured G flows. This configuration does not permit the gas to be measured G to flow into the non-measurement region S₁₁, and thus the gas analysis device 1 does not require, for example, a mechanism for circulating a purge gas or the like. Therefore, the gas analysis device 1 is able to measure a high temperature gas to be measured G and the configuration of the gas analysis device 1 can be simplified.

The gas analysis device of the present invention is not limited to the configuration of the probe type gas analysis device 1 according to one or more embodiments described above, but may be modified in various ways. The gas analysis device of the present invention is not limited to a configuration wherein, for example, the cooling unit 12 is provided independent from the probe unit 11 and the analysis unit 13 as described in the above embodiments. For example, the cooling unit may be configured integrally with the probe or the analysis unit. Here, when the cooling unit is configured integrally with the probe, then at least a portion of the cooling unit may be positioned in the gas pipe.

Furthermore, the gas analysis device of the present invention is not limited to a configuration that circulates coolant in the heat transfer inhibiting space S_{1b} as described in the above embodiments. For example, coolant may be sealed in the heat transfer inhibiting space, and the cooling unit may be cooled from the outside. Furthermore, the heat transfer inhibiting space may be a vacuum to improve the insulating effect. In other words, the gas analysis device may be provided with an insulating mechanism (insulator) wherein the space in the probe main body separated from the space in the gas pipe by the window is a vacuum. In such a case, the cooling unit includes an insulating mechanism wherein the space (non-measurement region) in the probe separated from the space (measurement region) inside the gas pipe by the window is a vacuum. Even when the heat transfer inhibiting space is a vacuum as described above, it is possible to supplement the cooling effect by cooling the cooling unit from the outside.

Moreover, the gas analysis device of the present invention is not limited to a configuration that circulates coolant to one heat transfer inhibiting space S_{1b} as described in the above embodiments. For example, it may be configured such that a plurality (three or more) of windows (transparent members) are provided to divide (separate) the heat transfer inhibiting space, whereby a plurality (two or more) of heat transfer inhibiting spaces would be defined and heat transfer from the gas to be measured may be inhibited in stages. For example, three windows (transparent members) may be provided, a heat transfer inhibiting space divided (separated) in two may be defined, the heat transfer inhibiting space on the probe side may be configured as a vacuum to preserve the insulating effect, and coolant may be circulated in the heat transfer inhibiting space on the analysis unit side to supplement the cooling effect. In such a case, the cooling unit includes both a cooling mechanism and an insulating mechanism.

Furthermore, the gas analysis device according to the present invention is not limited to a configuration flowing the gas to be measured G to the measurement region S₁ₐ via the upstream side opening 21b and the downstream side opening 21c as described in the above embodiments. For example, the portion facing the measurement region of the probe may be configured with a porous material that the gas to be measured is able to pass through, whereby the gas to be measured can be flowed to the measurement region without providing openings. In other words, the gas analysis device may include at least the portion facing the measurement region in the probe main body configured with a porous material that the gas subject to measurement is able to pass through. In such a case, for example, the probe may be formed by covering (blocking) the opening with a porous material, or the probe may be formed by connecting a first cylindrical member (base end side of the probe) composed of a non-porous material having a window dividing (separating) the measurement region and the non-measurement region as a boundary, and a second cylindrical member (tip side of the probe) composed of a porous material.

The gas analysis device according to one or more embodiments of the present invention is applied to a cross duct type gas analysis device. Here, cross duct type means, for example, a kind of gas analysis device having a structure provided with an independent light source and light detector, which are positioned opposing one another so as to sandwich the piping through which the gas to be measured flows.

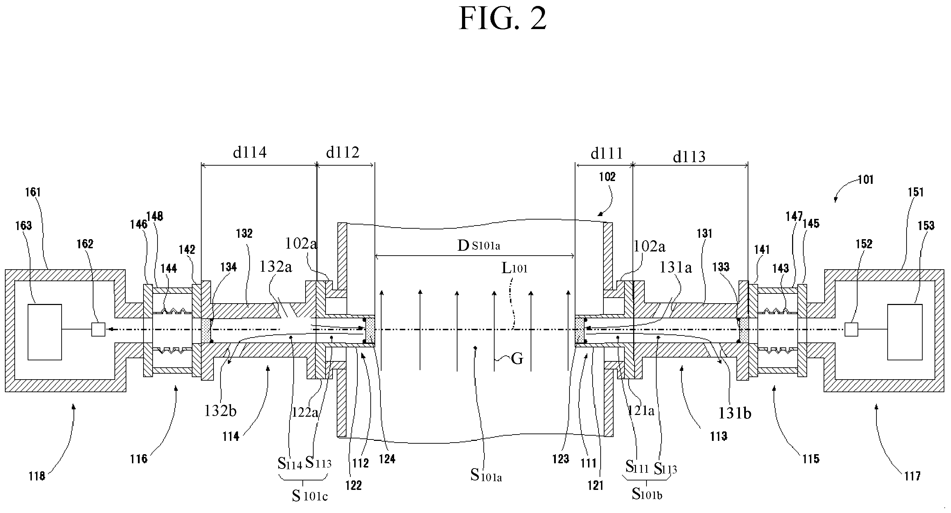

The structure of the gas analysis device according to one or more embodiments will be described with reference to FIG. 2.

As illustrated in FIG. 2, a gas analysis device 101 is mounted to a gas pipe (piping) 102 through which the gas subject to measurement (gas to be measured) G flows, and the gas analysis device performs analysis on the components contained in the gas to be measured G flowing through the gas pipe 102 (measures components, concentrations thereof, and the like). The gas to be measured G includes gas (process gas) such as, for example, CO, CO₂, H₂O, CₘHₙ (m and n are any whole number), NH₃, O₂, or the like.

The gas analysis device 101 comprises insertion tubes (cylindrical members) 111 and 112 which are mounted to the gas pipe 2 and have a portion thereof extending into the gas pipe 102; cooling units 113 and 114 which are connected to the insertion tubes 111 and 112, respectively, and disposed outside the gas pipe 102; optical axis adjustment units 115 and 116 which are connected to the cooling units 113 and 114, respectively, and are disposed outside the gas pipe 102; and a light emitting unit 117 and light receiving unit 118 which are connected to the optical axis adjustment units 115 and 116, respectively, and disposed outside the gas pipe 102. The insertion tube 111, the cooling unit 113, and the light emitting unit 117 are provided opposing the insertion tube 112, the cooling unit 114, and the light receiving unit 118 so as to sandwich the gas pipe 102.

Here, the light emitting unit 117 emits a measurement beam and irradiates it to the gas to be measured G; the light receiving unit 118 receives the measurement beam and analyses the absorption spectrum of the gas to be measured G; the insertion tubes 111 and 112 form a measurement region S₁₀₁ₐ for the measurement beam to pass through the gas to be measured G; the optical axis adjustment units 115 and 116 adjust the optical axis of the measurement beam; and the cooling units 113 and 114 include a cooling mechanism to inhibit heat transfer from the insertion tubes 111 and 112 to the light emitting unit 117 or the light receiving unit 118. That is, in the gas analysis device 101, the light emitting unit 117 and the light receiving unit 118 are connected to the insertion tubes 111 and 112 via the cooling units 113 and 114, which include a cooling mechanism.

The insertion tubes 111 and 112 are provided with tube main bodies 121 and 122 connected to the gas pipe 102. The tube main bodies 121 and 122 are hollow members formed cylindrically (for example, substantially cylindrical) such that the measurement beam can pass through, and flanges 121a and 122a are formed in the base ends thereof. In other words, the tube main bodies 121 and 122 are cylindrical members covering the optical path of the measurement beam. The flanges 121a and 122 a are mechanically connected to the mounting member 102a provided on the gas pipe 102, and a portion of the tube main bodies 121 and 122 extend into the gas pipe 102. The tube main bodies 121 and 122 extend, for example, in a direction (optical axis direction) substantially orthogonal to the flow direction of the gas to be measured G in the gas pipe 102, and the external lengths d₁₁₁ and d₁₁₂ in the extension direction are approximately, for example, 100 to 500 mm.

The tube main bodies 121 and 122 are composed of a heat resistant member having heat resistance in a temperature band higher than the temperature of the gas to be measured G flowing through the gas pipe 102, and are formed of, for example, a ceramic such as alumina. In one or more embodiments, the heat resistant temperature of the tube main bodies 121 and 122 is, for example, at least 600°C, or at least 1000°C, or at least 1200°C.

Furthermore, windows (transparent members) 123 and 124 which the measurement beam is able to pass through are provided near the tip ends (end positioned in the gas pipe 102) of the insertion tubes 111 and 112 (tube main bodies 121 and 122). The windows 123 and 124 are composed of, for example, sapphire, and are integrally assembled with the internal face of the tube main bodies 121 and 122 using a metallized connection or the like. Here, the windows 123 and 124, which are disposed opposing one another, are distanced only by a predetermined distance D_{S101a}, are respectively fixed so as to obstruct the inside of the tube main bodies 121 and 122, and define the measurement region S₁₀₁ₐ. In other words, the windows 123 and 124 are provided so as to divide (separate) the measurement region S₁₀₁ₐ and the spaces (non-measurement regions) S₁₁₁ and S₁₁₂ in the tube main bodies 121 and 122, block off the hollow portion of the tube main bodies 121 and 122, and be exposed to the gas to be measured G flowing in the gas pipe 102.

The cooling units 113 and 114 are provided with cooling unit main bodies 131 and 132 which have one end thereof mounted to the base end (end on the side opposite to the tip end) of the insertion tubes 111 and 112. The cooling unit main bodies 131 and 132 are hollow members formed cylindrically (for example, substantially cylindrically) along the optical axis such that the measurement beam can pass through, and the spaces S₁₁₃ and S₁₁₄ therein communicate with the non-measurement regions S₁₁₁ and S₁₁₂ in the insertion tubes 111 and 112. The cooling unit main bodies 131 and 132, for example, extend in a direction that is the same as the extension direction of the insertion tubes 111 and 112 (tube main bodies 121 and 122) outside the gas pipe 102, and the external lengths d₁₁₃ and d₁₁₄ in the extension direction are, for example, approximately 500 mm.

The cooling unit main bodies 131 and 132 are composed of heat resistant members having heat resistance in a temperature band higher than the temperature of the gas to be measured G flowing through the gas pipe 102, and are formed of, for example, a ceramic such as alumina. In one or more embodiments, the heat resistant temperature of the cooling unit main bodies 131 and 132 is at least 600°C, or at least 1000°C, or at least 1200°C. The materials for the cooling unit main bodies 131 and 132 may differ from the materials for the tube main bodies 121 and 122. Furthermore, the heat resistant temperature of the cooling unit main bodies 131 and 132 may differ from the heat resistant temperature of the tube main bodies 121 and 122, may be a temperature higher than the heat resistant temperature of the tube main bodies 121 and 122, or may be a temperature lower than the heat resistant temperature of the tube main bodies 121 and 122. In one or more embodiments, the heat resistant temperature of the cooling unit main bodies 131 and 132 is the same temperature as or a temperature less than the heat resistant temperature of the tube main bodies 121 and 122.

Windows (transparent members) 133 and 134 which the measurement beam can pass through are provided near the other end of the cooling units 113 and 114 (cooling unit main bodies 131 and 132). The windows 133 and 134 are composed of, for example, sapphire, and are integrally assembled to the interior face of the cooling unit main bodies 131 and 132 using a metallized connection or the like. Here, the windows 133 and 134 are fixed so as to obstruct the inside of the cooling unit main bodies 131 and 132, and heat transfer inhibiting spaces S_{101b} and S_{101c} filled with coolant as explained hereafter are defined by the non-measurement regions S₁₁₁ and S₁₁₂ and the internal spaces S₁₁₃ and S114 (tube main bodies 121 and 122 and windows 123 and 124, and the cooling unit main bodies 131 and 132 and the windows 133 and 134). In other words, the windows 133 and 134 are provided so as to block off the hollow portions of the cooling unit main bodies 131 and 132.

The cooling units 113 and 114 (cooling unit main bodies 131 and 132) are provided with coolant feed ports 131a and 132a, respectively, for feeding coolant to the heat transfer inhibiting spaces S_{101b} and S_{101c} and coolant discharge ports 131b and 132b, respectively, for discharging the coolant fed to the heat transfer inhibiting spaces S_{101b} and S_{101c}. The coolant feed ports 131a and 132a and the coolant discharge ports 131b and 132b are each formed facing the internal spaces S₁₁₃ and S₁₁₄, respectively. Here, the internal spaces S₁₁₃ and S₁₁₄ communicate with the non-measurement regions S₁₁₁ and S₁₁₂, respectively, and thus the spaces (heat inhibiting spaces) S_{101b} and S_{101c} of both the internal spaces S₁₁₃ and S₁₁₄ and the non-measurement regions S₁₁₁ and S₁₁₂ are filled with coolant fed from the coolant feed ports 131a and 132a. The coolant is a fluid (gas or liquid) that does not influence the spectrum of the measurement beam, and for example, is a gas such as N2. In other words, the cooling units 113 and 114 include a cooling mechanism for circulating coolant to the spaces (non-measurement region) S₁₁₁ and S₁₁₂ in the insertion tubes 111 and 112 separated from the space (measurement region) S₁₀₁ₐ in the gas pipe 102 by the windows 123 and 124.

The optical axis adjustment units 115 and 116 are provided with mounting flanges 141 and 142 for mounting to the base end of the cooling units 113 and 114. The optical axis adjustment units 115 and 116 are provided with bellows 143 and 144 which the measurement beam can pass through and that have flexibility in the optical axis direction; fixed flanges 145 and 146 for sandwiching the bellows 143 and 144 with the mounting flanges 141 and 142; and adjustment screws 147 and 148 for connecting the mounting flanges 141 and 142 and the fixed flanges 145 and 146 and adjusting the bellows 143 and 144.

The light emitting unit 117 is provided with a light emitting unit main body (housing) 151 mounted to the fixed flange 145 of the optical axis adjustment unit 115. The light emitting unit 117 is provided with a light emitting part 152 for emitting the measurement beam and a control part 153 capable of adjusting the intensity and the like of the measurement beam. The light emitting part 152 and the control part 153 are electrically connected via a plurality of electronic substrates (not illustrated). The light emitting unit main body 151 is, for example, a pressure resistant explosion proof container housing each of these components. The light emitting unit main body 151 includes a module structure for integrally housing each of these components.

The light emitting part 152 includes an arbitrary light source capable of measuring the gas to be measured G using TDLAS (Tunable Diode Laser Absorption Spectroscopy). The light emitting part 152 includes, for example, a semiconductor laser. The control part 153 includes at least one processor. The control part 153 may be capable of controlling all operations of the gas analysis device 101 including the light emitting unit 117 and the light receiving unit 118.

The light receiving unit 118 is provided with a light receiving unit main body (housing) 161 mounted to the fixed flange 146 of the optical axis adjustment unit 116. The light receiving unit 118 is provided with a light receiving part 162 for receiving the measurement beam and an arithmetic logic part 163 for measuring and analyzing the absorption spectrum of the measurement beam. The light receiving part 162 and the arithmetic logic part 163 are electrically connected via a plurality of electronic substrates (not illustrated). The light receiving unit main body 161 is, for example, a pressure resistant explosion proof container housing each of these components. The light receiving unit main body 161 includes a module structure for integrally housing each of these components.

The light receiving part 162 includes an arbitrary light detector capable of measuring the gas to be measured G using TDLAS. The light receiving part 162 includes, for example, a photodiode. The arithmetic logic part 163 includes at least one processor. The arithmetic logic part 163 may be capable of controlling all operations of the gas analysis device 101 including the light emitting unit 117 and the light receiving unit 118.

The operation of the gas analysis device according to one or more embodiments will be described with reference to FIG. 2.

The light emitting part 152 faces the light receiving part 162 of the light receiving unit 118 which is disposed opposing the gas pipe 102 and irradiates the measurement beam. In FIG. 2, the measurement beam is represented as measurement beam L₁₀₁. The light emitting part 152 irradiates the measurement beam L₁₀₁ to the measurement region S₁₀₁ₐ including the gas to be measured G. The measurement beam L₁₀₁ passes through the window 133 and the window 123 along the optical axis, proliferates through the measurement region S₁₀₁ₐ formed in the gas pipe 102, and thereafter passes through the window 124 and the window 134 and enters the light receiving part 162. In other words, the light receiving part 162 receives the measurement beam L₁₀₁ passing through the measurement region S₁₀₁ₐ.

The arithmetic logic part 163 finds the absorption spectrum of the gas to be measured G and finds the components and concentrations thereof contained in the gas to be measured G from the spectrum of the measurement beam L₁₀₁ received by the light receiving part 162.

Here, the windows 123 and 124 and the tube main bodies 121 and 122 exposed to the gas to be measured G are respectively configured by materials having a high heat resistance, and thus the gas analysis device 101 can measure the components and concentrations thereof in the high temperature (for example, at least 1000°C) gas to be measured G.

Furthermore, the gas analysis device 101 effectively inhibits heat transfer from the windows 123 and 124 and the tube main bodies 121 and 122 exposed to the gas to be measured G due to the function of the cooling units 113 and 114, or in other words, due to circulating coolant to the heat transfer inhibiting spaces S_{101b} and S_{101c} configured by the non-measurement regions S₁₁₁ and S₁₁₂ and the internal spaces S₁₁₃ and S₁₁₄, and it is possible to sufficiently reduce the influence of heat transfer to the light emitting unit 117 (light emitting part 152, control part 153, and the like) and the light receiving unit 118 (light receiving part 162, arithmetic logic part 163, and the like).

The gas analysis device 101 performs analysis (measures the components, concentrations thereof, and the like) on the components contained in the gas to be measured G flowing through the gas pipe 102 as described above.

The gas analysis unit 101 irradiates the measurement beam to the gas to be measured (gas subject to measurement) G flowing in the gas pipe (piping) 102 and performs analysis on the components contained in the gas to be measured G based on the absorption spectrum of the measurement beam passing through the gas to be measured G, and is provided with tube main bodies (cylindrical members) 121 and 122 having at least a portion thereof disposed in the gas pipe 102, being provided so as to cover the optical path of the measurement beam, and with windows (transparent members) 123 and 124 which the measurement beam can pass through, being provided so as to block off the hollow portions of the tube main bodies 121 and 122 and be exposed to the gas to be measured G flowing in the gas pipe 102

The gas analysis device 101 is configured as described above, and thus the space inside the gas pipe 102 (through which the gas to be measured G flows) and the space outside the gas pipe 102 (wherein the light emitting unit 117 and the light receiving unit 118 are disposed) are separated by the windows 123 and 124. Therefore, for example, even when the gas to be measured G is at a high temperature (for example, 1000°C or greater), the gas to be measured G does not flow out to the light emitting unit 117 and the light receiving unit 118 via the insertion tubes 111 and 112, and it is possible to inhibit heat transfer from the insertion tubes 111 and 112 to the light emitting unit 117 and the light receiving unit 118 due to the gas to be measured G. In other words, the gas analysis unit 101 can measure the high temperature gas to be measured G.

Furthermore, the gas analysis device 101 is provided with the cooling units (cooling mechanisms) 113 and 114 which circulate coolant to the spaces in the tube main bodies 121 and 122 separated from the space in the gas pipe 102 by the windows 123 and 124, or in other words, is provided with the coolant feed ports (cooling mechanisms) 113a and 114a and the coolant discharge ports (cooling mechanisms) 113b and 114b. This configuration enables the gas analysis device 101 to better inhibit heat transfer from the insertion tubes 111 and 112 to the light emitting unit 117 and the light receiving unit 118 due to the gas to be measured G.

Moreover, the tube main bodies 121 and 122 in the gas analysis device 101 are composed of, for example, a ceramic such as alumina. This configuration enables the gas analysis device 101 to better inhibit heat transfer from the insertion tubes 111 and 112 to the light emitting unit 117 and the light receiving unit 118 due to the gas to be measured G.

Furthermore, in the gas analysis device 101, the tube main bodies 121 and 122 and the windows 123 and 124 are respectively provided opposing one another in the gas pipe 102, and define the measurement region S₁₀₁ₐ between the windows 123 and 124 disposed opposing one another and through which the gas to be measured G flows. This configuration does not permit the gas to be measured G to flow into the non-measurement regions S₁₁₁ and S₁₁₂, and thus the gas analysis device 101 does not require, for example, a mechanism for circulating a purge gas or the like. Therefore, the gas analysis device 101 is able to measure a high temperature gas to be measured G and the configuration of the gas analysis device 101 can be simplified.

The gas analysis device of the present invention is not limited to the configuration of the cross duct type gas analysis device 101 according to one or more embodiments described above, but may be modified in various ways. The gas analysis device of the present invention is not limited to a configuration wherein, for example, the cooling units 113 and 114 are provided independent from the insertion tubes 111 and 112, the optical axis adjustment units 115 and 116, the light emitting unit 117, and the light receiving unit 118 as described in the above embodiments. For example, the cooling units may be configured integrally with the insertion tubes, the optical axis adjustment units, or the light emitting unit and the light receiving unit. Here, when the cooling units are configured integrally with the insertion tubes, then at least a portion of the cooling units may be positioned in the gas pipe.

Furthermore, the gas analysis device of the present invention is not limited to a configuration that circulates coolant in the heat transfer inhibiting spaces S_{101b} and S_{101c} as described in the above embodiments. For example, coolant may be sealed in the heat transfer inhibiting spaces, and the cooling units may be cooled from the outside. Furthermore, the heat transfer inhibiting spaces may be a vacuum to improve the insulating effect. In such a case, the cooling units include insulating mechanisms wherein the spaces (non-measurement region) in the insertion tubes separated from the space (measurement region) inside the gas pipe by the windows is a vacuum. Even when the heat transfer inhibiting spaces are a vacuum as described above, it is possible to supplement the cooling effect by cooling the cooling units from the outside.

Moreover, the gas analysis device of the present invention is not limited to a configuration that circulates coolant to one heat transfer inhibiting space S_{101b} and S_{101c} as described in the above embodiments. For example, it may be configured such that a plurality (three or more) of windows (transparent members) are provided to divide (separate) the heat transfer inhibiting space, whereby a plurality (two or more) of heat transfer inhibiting spaces would be defined and heat transfer from the gas to be measured may be inhibited in stages. For example, three windows (transparent members) may be provided, a heat transfer inhibiting space divided (separated) in two may be defined, the heat transfer inhibiting space on the insertion tube side may be configured as a vacuum to preserve the insulating effect, and coolant may be circulated in the heat transfer inhibiting space on the light emitting unit side and light receiving unit side to supplement the cooling effect. In such a case, the cooling units include both a cooling mechanism and an insulating mechanism.

Although the disclosure has been described with respect to only a limited number of embodiments, those skilled in the art, having benefit of this disclosure, will appreciate that various other embodiments may be devised without departing from the scope of the present invention. Accordingly, the scope of the invention should be limited only by the attached claims.

### List of reference signs

- 1: gas analysis device
- 2: gas pipe (piping)
- 2a: mounting member
- 11: probe (cylindrical member)
- 12: cooling unit (cooling mechanism, insulating mechanism)
- 13: analysis unit
- 21: probe main body (cylindrical member)
- 21a: flange
- 21b: upstream side opening
- 21c: downstream side opening
- 22: reflection part (reflection member)
- 23: window (transparent member)
- 31: cooling unit main body (cylindrical member)
- 31a: coolant feed port (cooling mechanism, insulating mechanism)
- 31b: coolant discharge port (cooling mechanism, insulating mechanism)
- 32: window (transparent member)
- 41: analysis unit main body
- 42: light emitting part
- 43: light receiving part
- 44: arithmetic logic part
- G: gas to be measured (gas subject to measurement)
- D_{S1a}: predetermined distance
- S₁ₐ: measurement region
- S_{1b}: heat transfer inhibiting space (cooling space)
- S₁₁: non-measurement region
- S₁₂: internal space
- 101: gas analysis device
- 102: gas pipe (piping)
- 102a: mounting member
- 111, 112: insertion tube (cylindrical member)
- 111a, 112a: flange
- 113, 114: cooling unit (cooling mechanism, insulating mechanism)
- 113a, 114a: coolant feed port (cooling mechanism, insulating mechanism)
- 113b, 114b: coolant discharge port (cooling mechanism, insulating mechanism)
- 115, 116: optical axis adjustment unit
- 117: light emitting unit
- 118: light receiving unit
- 121, 122: tube main body (cylindrical member)
- 123, 124: window (transparent member)
- 131, 132: cooling unit main body (cylindrical member)
- 133, 134: window (transparent member)
- 141, 142: mounting flange
- 143, 144: bellows
- 145, 146: fixed flange
- 147, 148: adjustment screw
- 151: light emitting unit main body
- 152: light emitting part
- 153: control part
- 161: light receiving unit main body
- 162: light receiving part
- 163: arithmetic logic part
- G: gas to be measured (gas subject to measurement)
- D_{S101a}: predetermined distance
- S₁₀₁ₐ: measurement region
- S_{101b}, S_{101c}: heat transfer inhibiting space (cooling space)
- S₁₁₁, S₁₁₂: non-measurement region
- S₁₁₃, S₁₁₄: internal space

## Claims

1. A gas analysis device (1; 101) comprising:
a light emitter (42; 152) configured to irradiate, with a measurement beam, a gas flowing in piping (2; 102);
a processor configured to analyze components contained in the gas based on an absorption spectrum of the measurement beam passing through the gas;
a probe (11) that covers the optical path of the measurement beam; and
a first window (23; 123) through which the measurement beam passes and that is configured to block off a hollow portion of the probe (11) from the gas.

2. The gas analysis device (1; 101) according to claim 1, wherein
the first window (23; 123) is configured to separate a space in the probe (11) from a space in the piping (2; 102), and
the gas analysis device (1; 101) further comprises a cooler (12; 113) configured to circulate coolant to the space in the probe (11).

3. The gas analysis device (1; 101) according to claim 1, wherein
the first window (23; 123) is configured to separate a space in the probe (11) from a space in the piping (2; 102), and
the gas analysis device (1; 101) further comprises an insulator (12; 113) configured to provide a vacuum to the space in the probe (11).

4. The gas analysis device (1; 101) according to any of claims 1-3, wherein the probe (11) is composed of ceramic.

5. The gas analysis device (1) according to any one of claims 1-4, further comprising:
a reflector (22) configured to reflect the measurement beam,
wherein the reflector (22) is disposed at a predetermined distance from the first window (23), and
wherein a measurement region through which the gas flows is defined between the first window (23) and the reflector (22).

6. The gas analysis device (1) according to claim 5, wherein a portion of the probe (11) including the measurement region comprises a porous material through which the gas passes.

7. The gas analysis device (101) according to any of claims 1-6, wherein:
the probe comprises a first insertion tube (111); and
the gas analysis device (101) further comprises:
a second insertion tube (112) that covers the optical path of the measurement beam; and
a second window (124) through which the measurement beam passes and that is configured to block off a hollow portion of the second insertion tube (112) from the gas,
wherein a measurement region through the gas is defined between the first window (123) and the second window (124) when the first window (123) and the second window (124) are disposed to oppose each other in the piping (102).
